Europäisches Patentamt

European Patent Office

Office européen des brevets

(19)

(11) Publication number: **0 404 234**
**A1**

# EUROPEAN PATENT APPLICATION

(12)

(21) Application number: **90201544.5**

(22) Date of filing: **15.06.90**

(51) Int. Cl.⁵: **A01D 43/00, A01D 34/00**

(30) Priority: **19.06.89 DK 3007/89**

(43) Date of publication of application:
**27.12.90 Bulletin 90/52**

(84) Designated Contracting States:
**DE FR GB NL SE**

(71) Applicant: **MIDTVEST DAN-GODNINGS CENTER 1990 APS**
**Lille Hedegardsvej 2, Borbjerg**
**DK-7500 Holstebro(DK)**

(72) Inventor: **Hedegard, Albert**
**Lille Hedegardsvej 2, Borbjerg**
**DK-7500 Holstebro(DK)**

(74) Representative: **Ellyton, Frants**
**c/o Magnus Jensens Succ., Frederiksborgvej 15**
**DK-3520 Farum(DK)**

(54) **A machine for fertilizing, particularly grass fields.**

(57) The invention relates to a machine for applying fertilizer, especially to grass fields and using fertilizer of a type which is delivered in liquid form by spreading by means of nozzles. The fertilizer is usually of the nitrogen-phosphoros-potassium type or the urea type. The machine according to the invention is characterized in that its spreading nozzles (9) are placed beneath a mower known per se, for instance of the disk cutter type. The nozzles are placed on a common distributing bar (8) which is placed immediately behind the cutting devices (1) so that the fertilizer liquid will be spread over the stubble (S) at the same time as the swath (A) is lifted off the ground. The cut crop is then deposited on top of the stubble behind the mower and in this way covers the now fertilized stubble. The fertilizer will then exercise its effect in a humid microclimate beneath the swath and will in this way have an enhanced and accelerated effect.

As to working conditions, the method presents the advantage that the laying in swaths and the depositing of the fertilizer take place in one operation. It is furthermore an important advantage that the fertilizer application takes place without the delay which the tedding or drying of the swath will otherwise give rise to so that the after-growth of the field will be optimal.

Fig. 1

EP 0 404 234 A1

## A Machine for Fertilizing, Particularly Grass Fields

This invention relates to a machine for fertilizing, particularly grass fields, and more closely defined of the kind indicated in the preamble of claim 1.

When harvesting grass for ensiling and drying of the grass (for the preparation of forage pellets) the normal practice is that one cuts the grass and leaves it some days in swaths with a view to the tedding, i.e. the drying of the grass, before the grass is finally harvested by means of a forage harvester. The tedding, or drying, is with a view to obtaining a suitably low water contents in the crop before further processing (drying for obtaining forage pellets) or ensiling.

The after-growth of the grass field depends upon how quickly one can add fresh fertilizer to the field. As long as the grass is laid in swaths a fertilizing in the traditional sense of the word cannot be carried out because the crop laid in swaths would then be contaminated by the fertilizer. This is true no matter if the fertilizer is applied in solid or liquid form.

The object of the invention is the fertilizing of the field at the same time as the laying into swaths takes place and particularly in such a manner that the fertilizer is spread directly in the stubble beneath the crop laid in swaths. According to the invention this is obtained by the combination of a mower known per se and equipment for spreading liquid fertilizer, as indicated in the characterising clause of claim 1.

By this measure is obtained an immediate fertilizing effect and therefore a quicker and more dependable after-growth of the grass. Experience has shown that the liquid fertilizer, spread directly in the humid microclimate beneath the swath (i.e. beneath the grass left in the swaths) has an enhancing effect upon the fertilizing in comparison to fertilizer spread in a dry field. Specifically the method is clearly superior to solid nitrogen-phosphoros-potassium fertilizer spread on the dry field after harvesting of the crop which means to say a delay of 2-6 days, compared to the method of the invention.

As to the working conditions, the method presents the advantage that the laying in swaths and the fertilizing take place in a single step. In farms, in which a daily harvesting of fresh grass for feeding takes place, the method brings about that the after-growth of the grass field keeps pace with the consumption so that the harvested grass gets a more uniform quality. In this case the fertilizer spreading equipment (the nozzle bar) is placed beneath the forage harvester so that the fertilizing will take place at the same time as the harvesting.

In the fertilizing method of the invention the liquid fertilizer is spread directly in the stubble at the same time as the grass which has just been cut is lifted off the field by the cutting and stem breaking devices of the mower. The grass to be left in swaths is deposited on top of the stubble immediately behind the mower. The contamination of the fertilizer on the crop is minimal and appears in practice to be of no importance to the quality of the feed.

As to spreading equipment, i.e. nozzles, pump and container, use can advantageously be made of equipment of the kind which is known from usual field sprayers, cf. claim 2. Especially suited is equipment intended for depositing liquid nitrogen-phosphoros-potassium fertilizer, cf. claim 4.

According to the invention, instead of spraying nozzles use can advantageously be made of trailing tubes for distributing the fertilizer in the stubble, cf. claim 5. In this way a more reliable depositing of the fertilizer in the bottom of the stubble and a reduced fertilizer contamination of the crop laid in swaths are obtained.

The invention will be more closely explained in the following, reference being had to the drawing in which

Fig. 1 is a mower on which is mounted the equipment according to the invention for spraying a liquid fertilizer, in a vertical section,

Fig. 2 is the same mower having a fertillizer spreading equipment in the form of a number of trailing tubes suspended from a common distributing bar, and

Fig. 3 is the distributing bar shown separately in a side view.

The mower shown in section in the drawing is of the disk cutter type, i.e. the type in which the crop (A) is cut or laid in swaths by a number of rotary substantially horizontal beating devices 1. The crop is then treated by a rotary stem breaking drum 2 and delivered in a broad band lying loose on top of the stubble (S) behind the mower at 3. The height-adjustable breaking beam of the mower is indicated by 4 and its shield by 5. A bottom shield is indicated by 6.

Behind the bottom shield 6 on the lower side of an oblique bottom plate 7 is mounted a horizontal fertilizer distributing bar 8. This bar has a number of downward-pointing nozzles 9 intended for the spreading of the liquid fertilizer directly on the stubble (S). The spreading takes place in the zone in which the crop is lifted off the field and therefore at the same time as the mowing takes place.

The distributing bar 8 consists substantially of a tube which in one end is connected to a flexible pressure tube. The tube is connected to a pump which may be an ordinary field spraying pump of the membrane type. The pump is driven via the mechanical power supply of the tractor or by means of a separate hydraulic motor which is coupled to the hydraulic power supply. Neither the pressure tube nor the pump or the liquid fertilizer container is shown in the drawing. The liquid fertilizer, usually of the nitrogen-phosphoros-potassium type or of the urea type, is confined in a container which advantageously can be mounted at the front of the tractor with a view to the weight distribution.

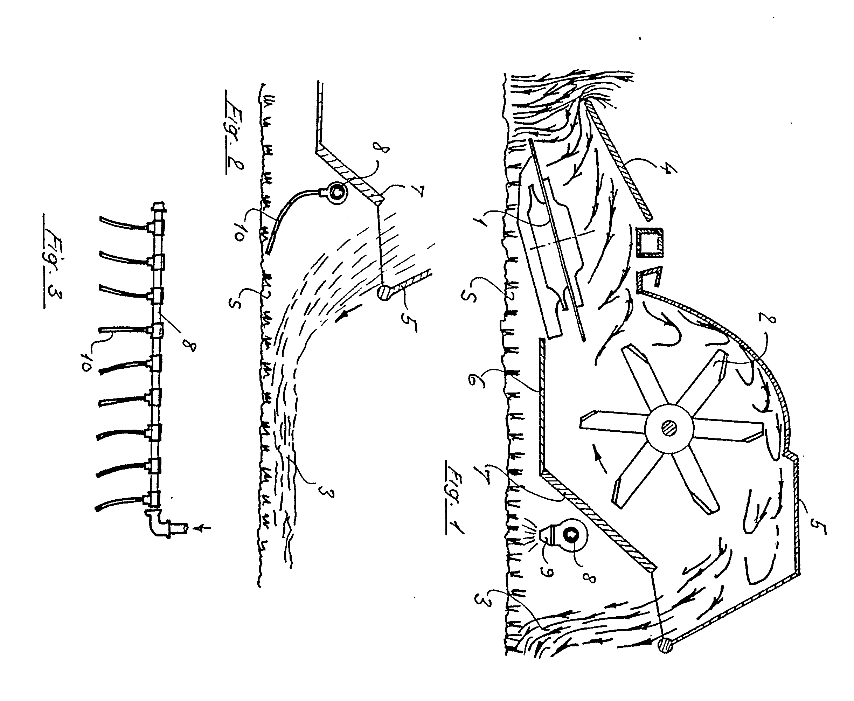

Figs. 2 and 3 show the distributing bar 8 in an embodiment having trailing tubes 10. These tubes sweep through the stubble during the fertilizer application and bring thereby about that the fertilizer is delivered close to or directly on the surface of the ground in contradiction to the nozzles 9 which function by spreading the fertilizer over the stubble from a more elevated position.

It should be noted that the application is not restricted to the embodiment shown in the drawing and explained in the foregoing specification. The spreading equipment according to the invention may, as mentioned, also be used in connection with forage harvesters and similar harvesting devices and the more detailed construction of the spreading equipment may be varied in any number of ways.

## Claims

1. A machine for applying fertilizer, especially to grass fields using fertilizer of the type which is delivered in liquid form by spraying by means of nozzles or similar devices for distributing and metering the fertilizer liquid, **characterized by** the fact that the nozzles (9) are mounted on a mower or forage harvester known per se immediately behind and beneath the cutting devices (1) with a view to distributing the fertilizer in the stubble (S) resulting from the laying into swaths or the forage harvesting, the fertilizing taking place in the same operation as the laying into swaths/forage harvesting beneath the transportation route of the cut material.

2. A machine according to claim 1 and moved by a tractor, **characterized by** the fact that the nozzles (9) are mounted on a common distributing bar (8) which is suspended beneath the transportation route of the material and that the liquid fertilizer is pumped to the nozzles from a supply container by means of a usual field sprayer pump, for instance of the membrane type, which is driven by the mechanical or hydraulic power supply of the tractor.

3. A machine according to claim 1 or claim 2, **characterized** by the fact that the supply container is suspended at the front end of the tractor.

4. A machine according to claim 1 or claim 3, **characterized** by the fact that the supply container and the pumping equipment are of the kind belonging to a usual field sprayer or a similar equipment set for use in delivering liquid fertilizer.

5. A machine according to claim 1, **characterized** by the fact that as spreading devices for the liquid fertilizer use is made of a system of trailing tubes (10) suspended from a common liquid distributing bar (8), the trailing tubes effecting a distributing and metering of the fertilizer liquid directly to the stubble (S).

Fig. 1

Fig. 2

Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 644 767 (FISCHER) <br> * Column 2, lines 6-10,63-67; column 3, lines 45-47, figure 2; column 4, lines 38-51, figure 1 * | 1-5 | A 01 D 43/00 <br> A 01 D 34/00 |
| A | DE-A-3 626 612 (HOFFMANN) <br> * Column 2, line 57 - column 3, line 4; figures 1,2,3 * | 1 | |
| A | DE-A-3 533 091 (NÜCHTER) <br> * Column 2, lines 45-52 * | 1,2,4 | |
| A | US-A-3 857 515 (ZENNIE) <br> * Figures 1,15 * | 1,2,4 | |

TECHNICAL FIELDS SEARCHED (Int. Cl.5)

A 01 D
A 01 C

The present search report has been drawn up for all claims

| Place of search | Date of completion of the search | Examiner |
|---|---|---|
| THE HAGUE | 14-09-1990 | ELMEROS |